# EUROPEAN PATENT APPLICATION

(11) **EP 1 739 125 A1**
(43) Date of publication of application: **03.01.2007**
(21) Application number: 05734550.6
(22) Date of filing: 20.04.2005
(51) Int. Cl.: C08L 23/00, C08K 9/06, H01B 3/44

(54) **POLYOLEFIN RESIN COMPOSITION AND ELECTRIC WIRES MADE BY USING THE SAME**

(30) Priority: 20.04.2004 JP 2004124595
(71) Applicant: YAZAKI CORPORATION, Minato-ku Tokyo 108-8333 (JP)
(72) Inventor: KODAMA, Koji C/O Yazaki Parts Co., Ltd., Shizuoka 410-1194 (JP); KATO, Takayuki C/O Yazaki Parts Co., Ltd., Shizuoka 410-1194 (JP); KIMURA, Shuichi C/O Yazaki Parts Co., Ltd., Shizuoka 410-1194 (JP); KATSUMATA, Makoto C/O Yazaki Parts Co., Ltd., Shizuoka 410-1194 (JP); USHIJIMA, Hitoshi C/O Yazaki Parts Co., Ltd., Shizuoka 410-1194 (JP); KAGAWA, Atsushi C/O Yazaki Parts Co., Ltd., Shizuoka 410-1194 (JP); TANIGUCHI, Tomohiro C/O Yazaki Parts Co., Ltd., Shizuoka 410-1194 (JP)
(74) Representative: Grünecker, Kinkeldey, Stockmair & Schwanhäusser Anwaltssozietät
(86) International application number: PCT/JP2005/007544
(87) International publication number: WO 2005/103138

(57) **Abstract**

A polyolefin resin composition excellent in flame retardancy and mechanical properties and also in wearing resistance and an electric wire produced with the composition are provided.

The polyolefin resin composition is **characterized by** containing, as a flame retardant, magnesium hydroxide particles which have a higher fatty acid bonded to part of the surface of the particles and further have a silicone oil having reactivity bonded to that part of the particles which does not have the higher fatty acid bonded thereto. The electric wire is **characterized by** having a sheath layer formed from the polyolefin resin composition.

## Description

### Technical Field

The present invention relates to a polyolefin resin composition and an electric wire using the same. More particularly, the invention relates to a polyolefin resin composition excellent in flame retardancy and mechanical properties and also in wearing resistance, and to an electric wire using this composition.

### Background Art

In the technical field of resin compositions such as electric-wire coating materials, the amount of magnesium hydroxide used as a flame retardant excellent in nontoxicity, less-smoking properties, and noncorrosive properties in place of conventional halogen compound flame retardants is increasing in recent years (see, for example, patent document 1).
However, in order for magnesium hydroxide to exhibit its flame retardancy, it is required to be added in a concentration as high as about 60% by weight based on the polymer. Plastic composites into which magnesium hydroxide has been added in such a high concentration have a problem that they are reduced in mechanical properties and moldability (see, for example, patent document 2). This is attributable to the decrease in relative polymer amount resulting from the addition of such a large amount of magnesium hydroxide and to the hydrophilicity of magnesium hydroxide itself.
For overcoming those problems, it has been attempted to hydrophobized the surface of magnesium hydroxide with a higher fatty acid or the like or to reduce the addition amount of magnesium hydroxide by mixing various auxiliaries (see, for example, patent document 3). However, even with these attempts, it has been impossible to obtain a fully satisfactory resin composition.

Patent Document 1: JP-A-2000-63583 (pages 1-2)
Patent Document 2: JP-A-2001-288313 (page 2)
Patent Document 3: JP-A-2002-128966 (pages 1-2)

### Disclosure of the Invention

### Problems that the Invention is to Solve

The present inventors succeeded in eliminating the problems of related-art techniques described above. An object of the invention is to provide a. polyolefin resin composition excellent in flame retardancy and mechanical properties and also in wearing resistance. Another object is to provide an electric wire using the same.

### Means for Solving the Problems

The present inventors made intensive investigations in order to accomplish those objects. As a result, they have found that the magnesium hydroxide addition amounts heretofore in use can be reduced by devising a surface treatment for the magnesium hydroxide to be used. The invention has been thus achieved.

The invention has the following constitutions.
(1) A polyolefin resin composition which comprises, as a flame retardant, magnesium hydroxide particles which have a higher fatty acid bonded to part of the surface of the particles, and further have a silicone oil having reactivity bonded to that part of the particles which does not have the higher fatty acid bonded thereto.
(2) The polyolefin resin composition according to the above (1), which further comprises, as a flame retardant, magnesium hydroxide particles having an only higher fatty acid bonded to the surface of the particles.
(3) The polyolefin resin composition according to the above (2), wherein the amount of the magnesium hydroxide particles having bonded thereto both a higher fatty acid and a silicone oil having reactivity is 5-15% by weight based on the sum of these magnesium hydroxide particles, and the magnesium hydroxide particles having an only higher fatty acid bonded to the surface thereof.
(4) The polyolefin resin composition according to any one of the above (1) to (3), wherein the higher fatty acid is stearic acid.
(5) The polyolefin resin composition according to any one of the above (1) to (4), wherein the reactive silicone oil is a methyl hydrogen silicone oil.
(6) The polyolefin resin composition according to any one of the above (1) to (5), which comprises a polyolefin resin composition containing ultrafine nylon fibers dispersed therein.
(7) The polyolefin resin composition according to the above (6), wherein in the polyolefin resin composition containing ultrafine nylon fibers dispersed therein, the ratio of the weight of the polyolefin resin (PO) to that of the ultrafine nylon fibers (Ny) is from 5:5 to 9:1 (PO:Ny).
(8) The polyolefin resin composition according to the above (7), wherein in the polyolefin resin composition containing ultrafine nylon fibers dispersed therein, the ratio of the weight of the polyolefin resin (PO) to that of the ultrafine nylon fibers (Ny) is 8:2 (PO:Ny).
(9) The polyolefin resin composition according to any one of the above (1) to (8), which comprises silica particles whose surface has been treated with methyl groups.
(10) An electric wire which comprises a sheath layer formed from the polyolefin resin composition of any one of the above (1) to (9).

The mechanism by which the polyolefin resin composition of the invention functions has not been elucidated. It is, however, presumed that the magnesium hydroxide particles having both a higher fatty acid and a silicone oil having reactivity bonded thereto satisfactorily disperse in the resin and, hence, the polyolefin resin composition is improved in flame retardancy and mechanical properties.

The flame retardancy and mechanical properties of the polyolefin resin composition of the invention are further improved by using the magnesium hydroxide particles having bonded thereto both a higher fatty acid and a silicone oil having reactivity (hereinafter referred to as "reactive silicone oil") (these magnesium hydroxide particles are hereinafter referred to as "higher fatty acid/reactive silicone oil-bonded magnesium hydroxide") in combination with magnesium hydroxide particles having a higher fatty acid only bonded thereto.

Furthermore, the polyolefin resin composition of the invention is improved in wearing resistance by further incorporating either a polyolefin resin composition containing ultrafine nylon fibers dispersed therein or silica particles whose surface has been treated with methyl groups.

### Advantages of the Invention

The polyolefin resin composition of the invention is superior in flame retardancy and mechanical properties because the higher fatty acid/reactive silicone oil-bonded magnesium hydroxide satisfactorily disperses in the resin. The composition can be made excellent also in wearing resistance by incorporating thereinto either a polyolefin resin composition containing ultrafine nylon fibers dispersed therein or silica particles whose surface has been treated with methyl groups.

The electric wire of the invention is excellent in flame retardancy and mechanical properties and in wearing resistance because it employs a sheath layer formed from the polyolefin resin composition. In addition, since the addition amount of the flame retardant necessary for obtaining desired flame retardancy can be smaller than those of conventional flame retardancy, the sheath layer is excellent in mechanical properties including elongation.

### Brief Description of the Drawings

[Fig. 1] Fig. 1 is a diagrammatic view of a higher fatty acid/reactive silicone oil-bonded magnesium hydroxide to be used as a flame retardant in the invention.
[Fig. 2] Fig. 2 is a graph showing the results of a measurement of elongation in Test 2.
[Fig. 3] Fig. 3 is a graph showing the results of a measurement of elongation after aging in Test 2.
[Fig. 4] Fig. 4 is a graph showing the results of a measurement of flame-out time in Test 2.
[Fig. 5] Fig. 5 is a graph showing the results of a determination of scrape characteristics in Test 2.
[Fig. 6] Fig. 6 is a graph showing the results of a measurement of elongation in Test 3.
[Fig. 7] Fig. 7 is a graph showing the results of a measurement of flame-out time in Test 3.
[Fig. 8] Fig. 8 is a graph showing the results of a determination of tensile modulus in Test 3.
[Fig. 9] Fig. 9 is a graph showing the results of a determination of scrape characteristics in Test 3.

### Description of the Reference Numerals

1 higher fatty acid/reactive silicone oil-bonded magnesium hydroxide
2 magnesium hydroxide particle
3 higher fatty acid
4 reactive silicone oil

### Best Mode for Carrying Out the Invention

The invention will be explained below in detail.

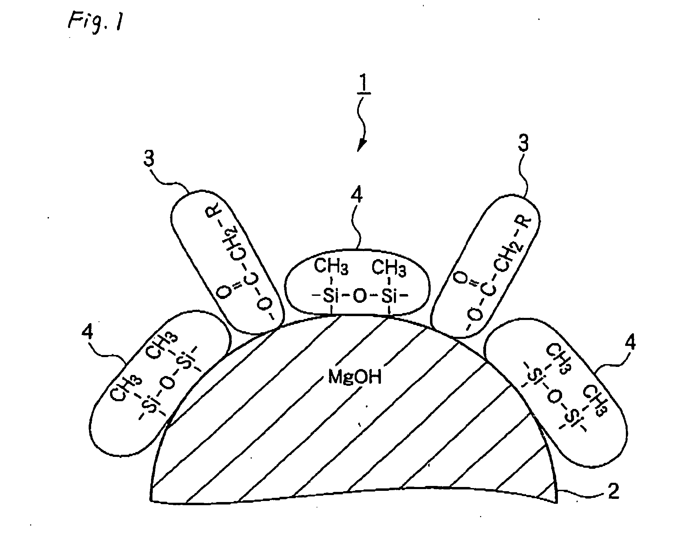

As shown in the diagrammatic view of Fig. 1, the higher fatty acid/reactive silicone oil-bonded magnesium hydroxide 1 to be contained as a flame retardant in the polyolefin resin composition of the invention comprises magnesium hydroxide particles 2, a higher fatty acid 3 bonded to part of the surface of the particles 2, and a reactive silicone oil 4 bonded to that surface part of the particles 2 which does not have the higher fatty acid 3 bonded thereto.
More particularly, the higher fatty acid 3 present partly is thought to be bonded to the surface of the magnesium hydroxide particles 2 through ester groups, while the reactive silicone oil 4 is thought to be present in a dehydrogenated state so as to spread over the part where the higher fatty acid 3 is absent.

The magnesium hydroxide particles 2 are not particularly limited, and a commercial product thereof may be used as it is. Alternatively, the particles may be produced by synthesis. Although the particle diameter thereof also is not particularly limited, general magnesium hydroxide particles for use as a flame retardant have particle diameters of about several micrometers.

The higher fatty acid 3 is not particularly limited, and examples thereof include stearic acid.

Examples of methods for bonding a higher fatty acid 3 to the surface of magnesium hydroxide particles 2 include a wet method in which the particles are treated with a solution.

The amount of the higher fatty acid 3 to be used for the surface treatment of magnesium hydroxide particles 2 is not particularly limited. However, as long as the amount thereof is in the range of 0.1-10.0% by weight, preferably 0.1-5.0% by weight, based on the magnesium hydroxide particles 2, moldings obtained from the polyolefin resin composition and electric wires obtained with the composition in the invention have an improved elongation.

Magnesium hydroxide particles 2 thus treated with a higher fatty acid 3 are available also on the market. Examples thereof include Kisuma 5, manufactured by Kyowa Chemical Industry Co., Ltd . , Magni f in H5C, manufactured by Albemarle Corp., and Magseeds N4, manufactured by Konoshima Chemical Co., Ltd.

On the other hand, the reactive silicone oil 4 is not particularly limited. Examples thereof include silicon-functional silicone oils such as a methyl hydrogen silicone oil, silanol-containing silicone oil, and alkoxy-containing silicone oil and carbon-functional silicone oils such as an amino-modified silicone oil, caxboxylic-acid-modified silicone, carbxnol-modified silicone oil, epoxy-modified silicone oil, and mercapto-modified silicone oil.

Such reactive silicone oils 4 improve the dispersibility of magnesium hydroxide particles 2 due to the functional groups possessed by themselves. Furthermore, those reactive silicone oils 4 become a glass ingredient (SiO₂) upon combustion and thereby function to improve flame retardancy.

The magnesium hydroxide particles 2 having a higher fatty acid 3 bonded to part of the surface thereof are further subjected to a surface treatment with a reactive silicone oil 4. Methods for this surface treatment are not particularly limited. The treatment may be conducted by a wet method in which the surface is treated with a solution, a dry method in which an extremely small amount of a solution is used, or another method.

Examples of the method in which the surface is treated with a solution include a method which comprises immersing the magnesium hydroxide particles 2 having a higher fatty acid 3 bonded to part of the surface thereof in a solution containing a reactive silicone oil 4 to wholly cover the particles with the reactive silicone oil 4, subsequently drying the particles, and then reacting the particles with the oil at a temperature of 100-200°C for a period of from several minutes to 2 hours.

A general technique as an example of the method in which an extremely small amount of a solution is used is the spraying method.

The amount of the reactive silicone oil 4 to be used for the surface treatment to the magnesium hydroxide particles 2 is not particularly limited. However, it is preferred that the amount thereof is in the range of 0.1-10.0% by weight, preferably 0.1-5.0% by weight, relative to the magnesium hydroxide particles 2. This is because as long as the amount of the oil is within that range, moldings and, in the invention, electric wires have an improved elongation. More preferably, the amount of the oil 4 is in the range of 0.5-3% by weight.

Compared to flame retardants heretofore in use, the higher fatty acid/reactive silicone oil-bonded magnesium hydroxide particles 1 can impart better flame retardancy. Consequently, a smaller incorporation amount suffices to obtain the same flame-retardant effect as compared with the conventional flame retardants and this is advantageous to mechanical properties. For example, in the sheath layers of electric wires, for example, the larger the amount of a flame retardant incorporated, the lower the elongation and flexibility. Because of this, a reduction in the amount of the flame retardant to be incorporated leads to improvements in elongation and flexibility.

In the polyolefin resin composition of the invention, a combination of the higher fatty acid/reactive silicone oil-bonded magnesium hydroxide particles 1 and magnesium hydroxide particles whose surface has been treated with a higher fatty acid only can be used as a flame retardant. When this combination is used, the amount of the higher fatty acid/reactive silicone oil-bonded magnesium hydroxide particles is selected while taking account of the desired flame retardancy and mechanical properties, cost, etc. However, the amount thereof is preferably 5-15% by weight based on the sum of both. Even when the amount of the higher fatty acid/reactive silicone oil-bonded magnesium hydroxide particles exceeds 15% by weight, the effect cannot be enhanced any more, resulting only in a cost increase.

On the other hand, the polyolefin resin to be used in the polyolefin resin composition of the invention is not particularly limited. The resin preferably is one having a melting point in the range of 80-250°C. Examples of such preferred resins include homopolymers and copolymers of olefins having 2-8 carbon atoms, copolymers of one or more olefins having 2-8 carbon atoms and vinyl acetate, copolymers of one or more olefins having 2-8 carbon atoms and acrylic acid or an ester thereof, copolymers of one or more olefins having 2-8 carbon atoms and methacrylic acid or an ester thereof, and copolymers of one or more olefins having 2-8 carbon atoms and a vinylsilane compound.

Specific examples thereof include high-density polyethylene, low-density polyethylene, linear low-density polyethylene, polypropylene, ethylene/propylene block copolymers, ethylene/propylene random copolymers, poly(4-methylpentene-1), poly(butene-1), poly(hexene-1), ethylene/vinyl acetate copolymers, ethylene/vinyl alcohol copolymers, ethylene/acrylic acid copolymers, ethylene/methyl acrylate copolymers, ethylene/ethyl acrylate copolymers, ethylene/propylene acrylate copolymers, ethylene/butyl acrylate copolymers, ethylene/2-ethylhexylacrylate copolymers, ethylene/hydroxyethyl acrylate copolymers, ethylene/vinyltrimethoxysilane copolymers, ethylene/vinyltriethoxysilane copolymers, and ethylene/vinylsilane copolymers. Furthermore, halogenated polyolefins such as chlorinated polyethylene, brominated polyethylene, and chlorosulfonated polyethylene are also advantageously used.

Especially preferred examples among those polyolefins include high-density polyethylene (HDPE), low-density polyethylene (LDPE), linear low-density polyethylene (LLDPE), polypropylene (PP), ethylene/propylene block copolymers (EPBC), ethylene/propylene random copolymers (EPRC), ethylene/vinyl acetate copolymers (EVA), ethylene/ethyl acrylate copolymers (EEA), and ethylene/vinyl alcohol copolymers. Most preferred examples among these include ones having a melt flow index (MFI) in the range of 0.2-50 g/10 min. Those polyolefins may be used alone or in combination of two or more thereof.

Polyolefins obtained by modifying those polyolefins with an acid anhydride may be used.

The wearing resistance of the polyolefin resin composition of the invention can be improved by mixing or incorporating either a polyolefin resin composition containing ultrafine nylon fibers dispersed therein or silica particles whose surface has been treated with methyl groups.
The nylon ingredient of the nylon fibers to be used in the polyolefin resin composition containing ultrafine nylon fibers dispersed therein (hereinafter often abbreviated as Ny-PO) is not particularly limited. Use may be made of a thermoplastic polyamide having amide groups in the main chain (hereinafter referred to as polyamide) which has a melting point in the range of 135-350°C. Preferred is one having a melting point which is higher by at least 20°C than that of the polyolefin and which, in particular, is in the range of 160-265°C. Preferred examples of such polyamide include ones which give tough fibers through extrusion and stretching.

Specific examples of the polyamide include nylon-6, nylon-66, nylon-6/nylon-66 copolymer, nylon-610, nylon-612, nylon-46, nylon-11, nylon-12, nylon-MXD6, polycondensates of xylylenediamine and adipic acid, polycondensates of xylylenediamine and pimelic acid, polycondensates of xylylenediamine and superic acid, polycondensates of xylylenediamine and azelaic acid, polycondensates of xylylenediamine and sebacic acid, polycondensates of tetramethylenediamine and terephthalic acid, polycondensates of hexamethylenediamine and terephthalic acid, polycondensates of octamethylenediamine and terephthalic acid, polycondensates of trimethylhexamethylenediamine and terephthalic acid, polycondensates of decamethylenediamine and terephthalic acid, polycondensates of undecamethylenediamine and terephthalic acid, polycondensates of dodecamethylenediamine and terephthalic acid, polycondensates of tetramethylenediamine and isophthalic acid, polycondensates of hexamethylenediamine and isophthalic acid, polycondensates of octamethylenediamine and isophthalic acid, polycondensates of trimethylhexamethylenediamine and isophthalic acid, polycondensates of decamethylenediamine and isophthalic acid, polycondensates of undecamethylenediamine and isophthalic acid, and polycondensates of dodecamethylenediamine and isophthalic acid.

Especially preferred examples among those polyamides include nylon-6 (PA6), nylon-66 (PA66), nylon-12 (PA12), and nylon-6/nylon-66 copolymer. These may be used alone or in combination of two or more thereof. These polyamides preferably have a molecular weight in the range of 10,000-200,000.

The fiber diameter of the nylon fibers is not particularly limited. However, it may be 5 µm or smaller.
The polyolefin to be used in the polyolefin resin composition containing ultrafine nylon fibers dispersed therein may be the same as any of the polyolefins enumerated above as examples of a major component of the resin composition described above.

In the Ny-PO, the ratio of the weight of the polyolefin resin (PO) to that of the ultrafine nylon fibers (Ny) is not particularly limited. However, it is preferably from 5:5 to 9:1 (PO:Ny), more preferably from 7:3 to 9:1 (PO:Ny), most preferably 8:2 (PO:Ny).

The amount of the Ny-PO to be used in the polyolefin resin composition of the invention is not particularly limited. However, the amount thereof is preferably 100 parts by weight or smaller, more preferably 50 parts by weight or smaller, even more preferably 2-20 parts by weight, based on 100 parts by weight of the resin composition.

When silica particles whose surface has been treated with methyl groups are used, then not only the resin shows improved adhesion to the silica particles but also wearing resistance and flame retardancy are improved. The content of the silica particles is preferably in the range of 2-20% by weight.

Processes for producing the polyolefin resin composition of the invention (methods for compounding the resin with the particles) are not particularly limited. However, a processing machine in general use, such as, e.g., a two-roll mill, kneader, Banbury mixer, Intermix, or single- or twin-screw kneading machine, can be used.

The invention further relates to an electric wire having a sheath layer formed from the polyolefin resin composition. For forming the sheath layer, a known method may be used.
The polyolefin resin composition may be extrusion-molded so as to cover a conductor.

### Examples

The invention will be explained below in more detail by reference to Examples, but the scope of the invention should not, of course, be limited by these Examples.

### (TEST 1)

Magnesium hydroxide particles whose surface had been treated with stearic acid (Kisuma 5, manufactured by Kyowa Chemical Industry Co., Ltd.; average particle diameter, 0.6-1 µm) were immersed in a treating liquid containing a methyl hydrogen silicone oil (MHS), dried, and then heated. A surface treatment was thus conducted so as to result in a combined MHS amount of 1% by weight to thereby prepare a higher fatty acid/reactive silicone oil-bonded magnesium hydroxide.
Subsequently, 60 parts by weight of the higher fatty acid/reactive silicone oil-bonded magnesium hydroxide was added to 100 parts by weight of polypropylene [melting point, 165°C; MFR = 70 (g/10 min)]. The ingredients were kneaded with a two-roll mill to prepare compound A. For the purpose of comparison, compound B was prepared in the same manner as that described above, except that the magnesium hydroxide particles whose surface had been treated with stearic acid (Kisuma 5) were used.
Compound A and compound B were examined for oxygen index in accordance with JIS K 7201-2. As a result, compound B had an oxygen index of 23.8%, whereas compound A had a higher oxygen index of 24.4%.

### (TEST 2)

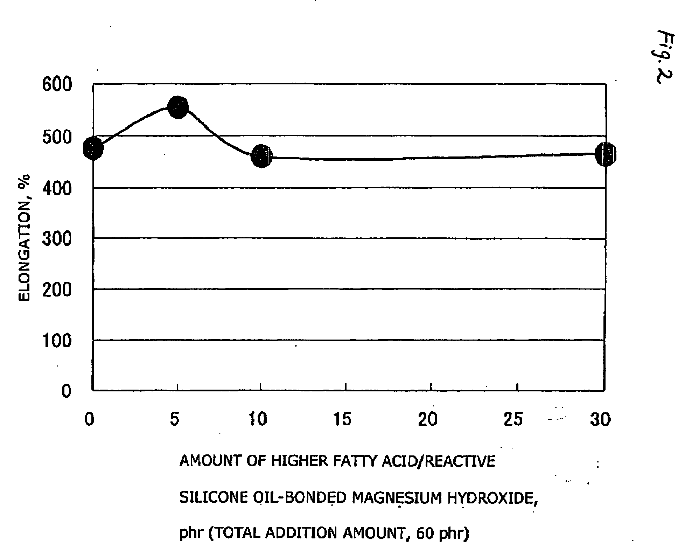

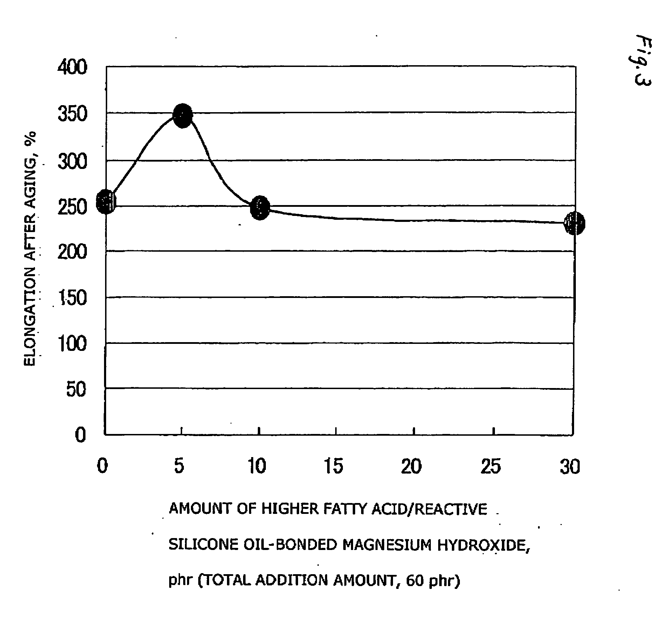

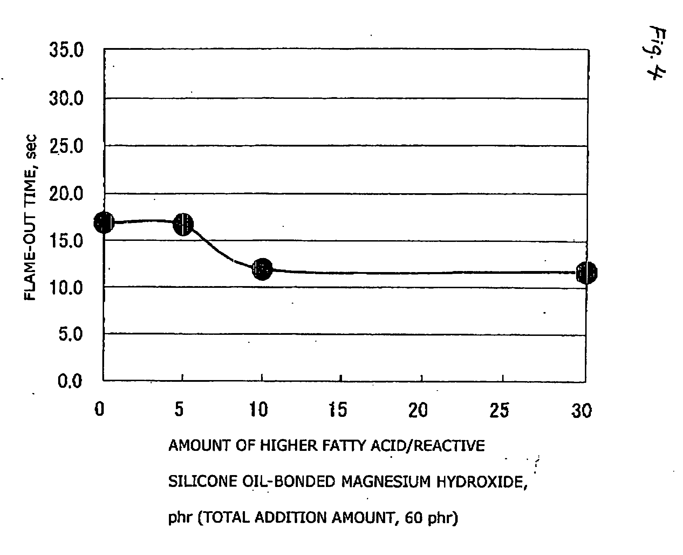

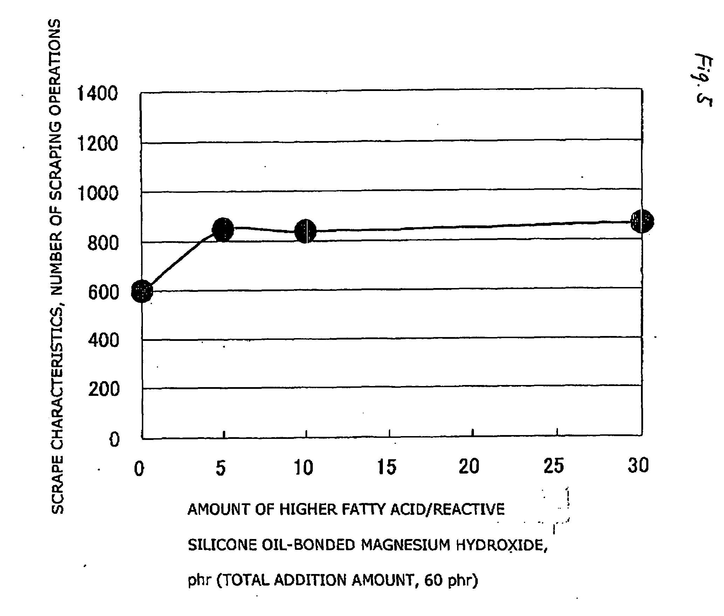

The higher fatty acid/reactive silicone oil-bonded magnesium hydroxide produced in Test 1 was mixed with the magnesium hydroxide particles whose surface had been treated with stearic acid (Kisuma 5) in various proportions to prepare flame retardants.
Subsequently, 60 parts by weight of each of the flame retardants prepared above was added to 100 parts by weight of polypropylene [melting point, 165°C: MFR = 70 (g/10 min)], and the ingredients were kneaded with a two-roll mill. Thus, compounds were obtained.
Each compound was extrusion-molded in a thickness of 0.2 mm on a 0.7-mmΦ copper wire to form a sheath layer. Thus, 0.35-sq test wires were produced. The test wires were examined for elongation in accordance with JIS K 7113, flame-out time in accordance with ISO 6722, item 12, Cable Flame Retardancy Test, and scrape characteristics in accordance with ISO 6722, item 9.3, Scrape Test. The relationship between the addition amount of the higher fatty acid/reactive silicone oil-bonded magnesium hydroxide and elongation and the relationship between the addition amount of the higher fatty acid/reactive silicone oil-bonded magnesium hydroxide and elongation after aging are shown in Fig. 2 and Fig. 3, respectively, as graphs. The relationship between the addition amount of the higher fatty acid/reactive silicone oil-bonded magnesium hydroxide and flame-out time and the relationship between the addition amount of the higher fatty acid/reactive silicone oil-bonded magnesium hydroxide and scrape characteristics are shown in Fig. 4 and Fig. 5, respectively, as graphs.
In each figure, there is a tendency that the performance improves as the addition amount of the higher fatty acid/reactive silicone oil-bonded magnesium hydroxide increases. When the amount of the higher fatty acid/reactive silicone oil-bonded magnesium hydroxide is 3 phr (i.e., 5% by weight of total flame retardant amount (60 phr)) or larger, all the performances are higher than in the case of adding no higher fatty acid/reactive silicone oil-bonded magnesium hydroxide. When the amount thereof is 5 phr (8.3% by weight of the total flame retardant amount), the performances show a peak. When the addition amount thereof exceeds 9phr (15. 0% by weight of the total flame retardant amount), then the performances are equal or inferior to those in the case of adding no higher fatty acid/reactive silicone oil-bonded magnesium hydroxide.
It can be seen from those results that when the higher fatty acid/reactive silicone oil-bonded magnesium hydroxide is used in combination with the magnesium hydroxide having an only higher fatty acid bonded thereto, it is preferred to regulate the amount of the higher fatty acid/reactive silicone oil-bonded magnesium hydroxide to 5-15% by weight of the total amount.

### (TEST 3)

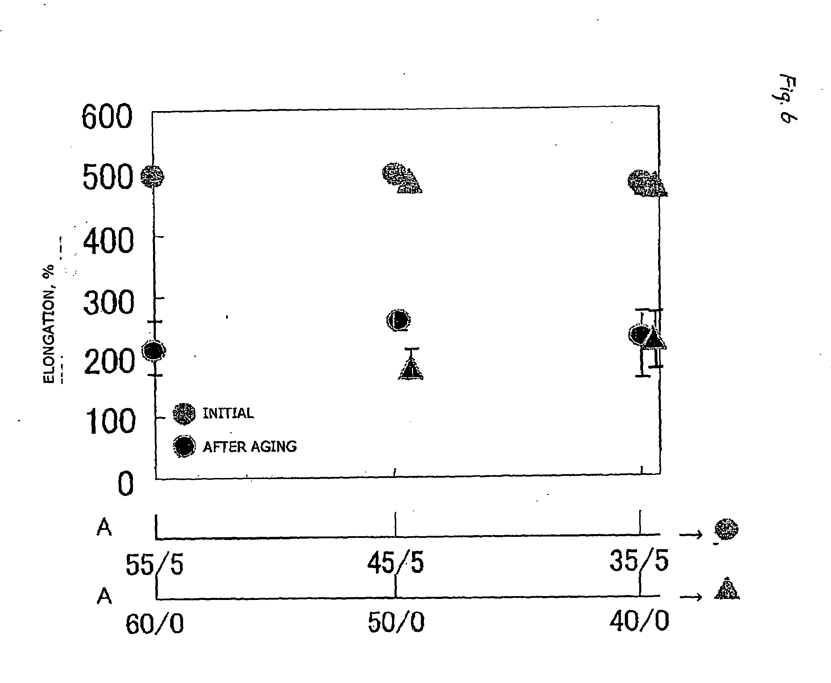

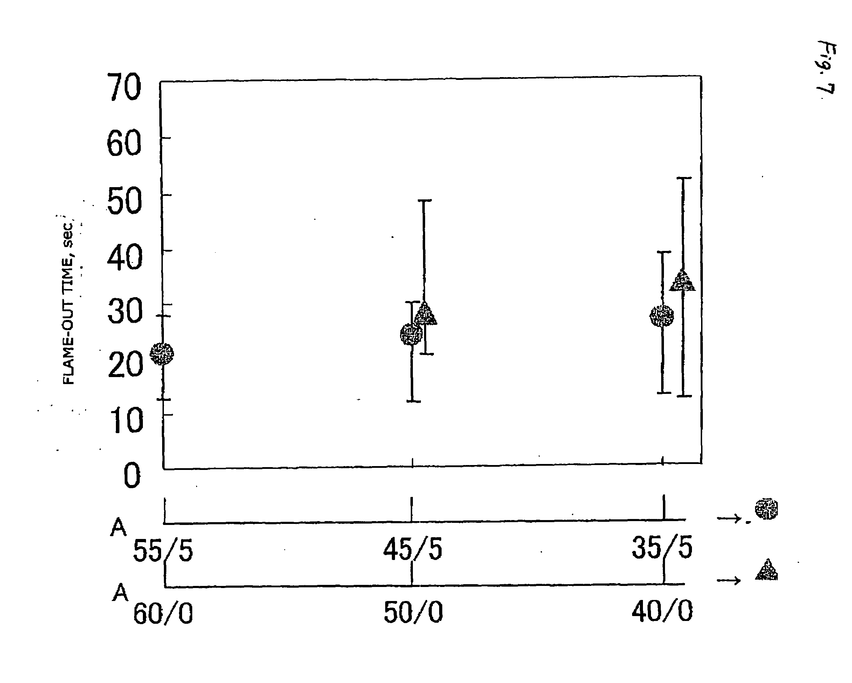

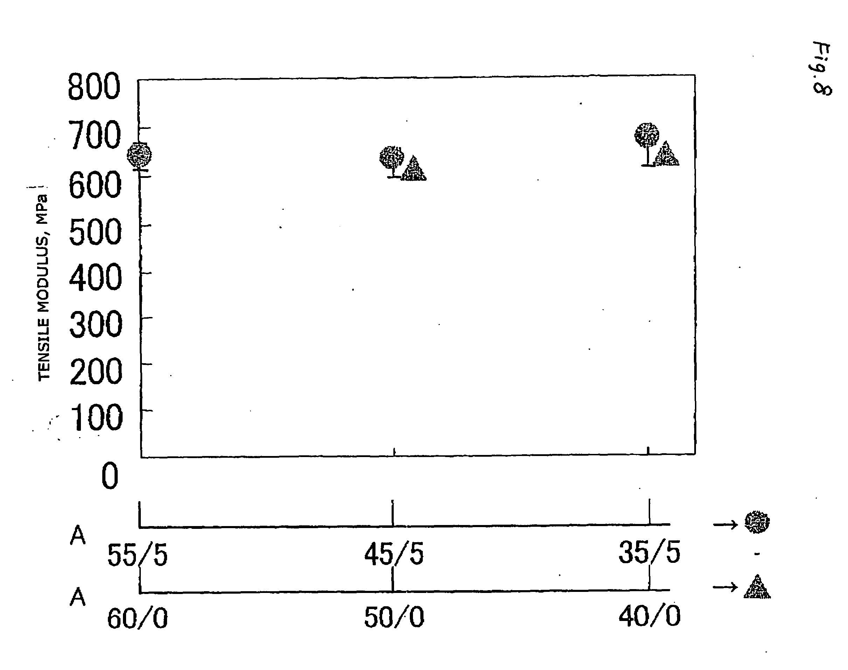

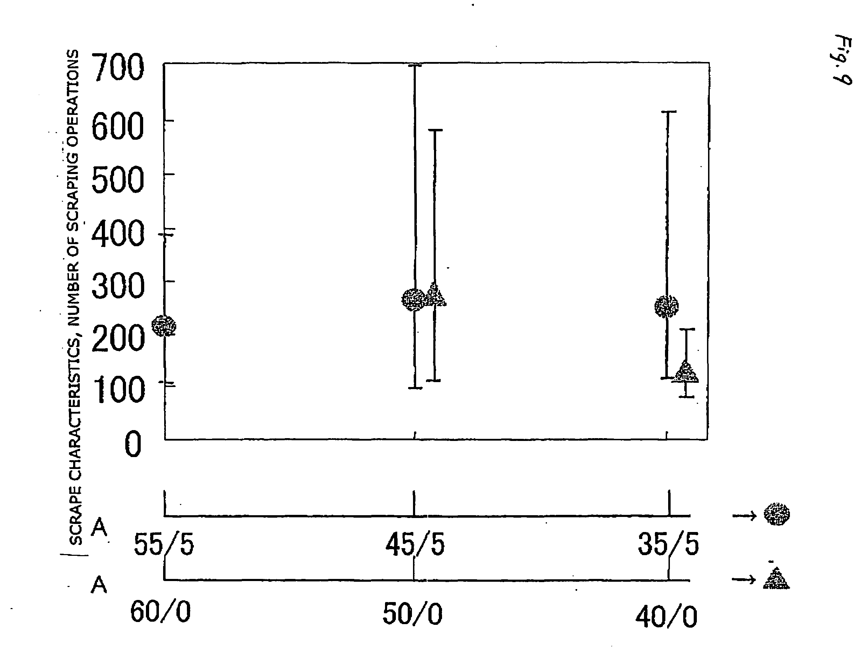

The higher fatty acid/reactive silicone oil-bonded magnesium hydroxide and magnesium hydroxide particles whose surface had been treated with stearic acid (Kisuma 5) were used as in Test 2 to prepare compounds while changing the proportions of the two ingredients and the total addition amount of both. The total addition amounts of the two ingredients were 40 phr, 50 phr, and 60 phr and, in each ease, the amount of the higher fatty acid/reactive silicone oil-bonded magnesium hydroxide added was 5 phr (8.3-12.5% by weight of the total flame retardant amounts) . For the purpose of comparison, the magnesium hydroxide particles whose surface had been treated with stearic acid (Kisuma 5) were added in an amount of 40 phr, 50 phr, or 60 phr to prepare compounds.
Each compound was examined for elongation, flame-out time, and scrape characteristics in the same manners as in Test 2. Furthermore, each compound was examined for tensile modulus, which was determined from the inclination of a stress-strain curve in an elastic region for the material just after test initiation in accordance with JIS K 7161 "Test Method for Tensile Properties". The relationship between the proportion and addition amount of the higher fatty acid/reactive silicone oil-bonded magnesium hydroxide and elongation and the relationship between the proportion and addition amount of the higher fatty acid/reactive silicone oil-bonded magnesium hydroxide and flame-out time are shown in Fig. 6 and Fig. 7, respectively, as graphs. The relationship between the proportion and addition amount of the higher fatty acid/reactive silicone oil-bonded magnesium hydroxide and tensile modulus and the relationship between the proportion and addition amount of the higher fatty acid/reactive silicone oil-bonded magnesium hydroxide and scrape characteristics are shown in Fig. 8 and Fig. 9, respectively, as graphs. In each figure, the abscissa A indicates (higher fatty acid-bonded magnesium hydroxide)/(higher fatty acid/reactive silicone oil-bonded magnesium hydroxide) ratio.
It can be seen from those results that use of the higher fatty acid/reactive silicone oil-bonded magnesium hydroxide in combination with the other flame retardant ingredient improves all performances although the differences are small when the addition amounts are large. Furthermore, Fig. 7, for example, shows that the flame-out time in the case of adding the higher fatty acid-bonded magnesium hydroxide only in an amount of 50 phr is about 30 seconds and that almost the same flame-out time can be attained even when the addition amount is 40 phr by using the higher fatty acid/reactive silicone oil-bonded magnesiumhydroxide in combination with thatmagnesiumhydroxide. It can be seen from these results that the amount of the flame retardant to be used can be reduced.

### (TEST 4)

To 80 parts by weight of low-density polyethylene [melting point, 110°C; MFR = 5.0 (g/10 min)] as a polyolefin were added 1.0 part by weight of γ-methacryloxypropyltrimethoxysilane as a silane coupling agent, 0.5 parts by weight of antioxidant Irganox 1010, and 0.5 parts by weight of di-α-cumyl peroxide (concentration, 40%) as a peroxide. These ingredients were introduced into a 45-Φ twin-screw extruder heated at 170°C, and were kneaded and palletized to obtain a silane-modified polyethylene. The whole silane-modified polyethylene,20parts by weight of nylon-6 (melting point, 215-225°C), and 0.5 parts by weight of Irganox 1010 were introduced into a twin-screw extruder equipped with a 3-mmΦ die set at 235°C. The ingredients were kneaded with the extruder, and the resultant mixture was extruded into a strand through the die. The strand was cooled with air, drawn up with a draw-off roll at a draft ratio of 7, stretched at a stretch ratio of 1.5 between 5-inch rolls at room temperature, and then palletized. Thus, a polyolefin resin composition containing ultrafine nylon fibers dispersed therein was obtained.
Two parts by weight of this polyolefin resin composition containing ultrafine nylon fibers dispersed therein was kneaded together with 98 parts by weight of polypropylene. Sixty parts by weight of the higher fatty acid/reactive silicone oil-bonded magnesium hydroxide was added to 100 parts by weight of the resultant mixture to prepare compound C. For the purpose of comparison, 60 parts by weight of the higher fatty acid/reactive silicone oil-bonded magnesium hydroxide was added to 100 parts by weight of polypropylene to prepare compound D.
Compound C and compound D were used to produce test wires in the same manner as in Test 2, and these test wires were examined for scrape characteristics. As a result, the number of scraping operations for compound D was 480, whereas that for compound C was larger, i.e., 600. The effect of the incorporation of dispersed ultrafine nylon fibers was ascertained.

## Claims

1. A polyolefin resin composition which comprises, as a flame retardant, magnesium hydroxide particles which have a higher fatty acid bonded to part of the surface of the particles, and further have a silicone oil having reactivity bonded to that part of the particles which does not have the higher fatty acid bonded thereto.

2. The polyolefin resin composition according to claim 1, which further comprises, as a flame retardant, magnesium hydroxide particles having an only higher fatty acid bonded to the surface of the particles.

3. The polyolefin resin composition according to claim 2, wherein the amount of the magnesium hydroxide particles having bonded thereto both a higher fatty acid and a silicone oil having reactivity is 5-15% by weight based on the sum of these magnesium hydroxide particles, and the magnesium hydroxide particles having an only higher fatty acid bonded to the surface thereof.

4. The polyolefin resin composition according to any one of claims 1 to 3, wherein the higher fatty acid is stearic acid.

5. The polyolefin resin composition according to any one of claims 1 to 4, wherein the reactive silicone oil is a methyl hydrogen silicone oil.

6. The polyolefin resin composition according to any one of claims 1 to 5, which comprises a polyolefin resin composition containing ultrafine nylon fibers dispersed therein.

7. The polyolefin resin composition according to claim 6, wherein in the polyolefin resin composition containing ultrafine nylon fibers dispersed therein, the ratio of the weight of the polyolefin resin (PO) to that of the ultrafine nylon fibers (Ny) is from 5:5 to 9:1 (PO:Ny).

8. The polyolefin resin composition according to claim 7, wherein in the polyolefin resin composition containing ultrafine nylon fibers dispersed therein, the ratio of the weight of the polyolefin resin (PO) to that of the ultrafine nylon fibers (Ny) is 8:2 (PO:Ny).

9. The polyolefin resin composition according to any one of claims 1 to 8, which comprises silica particles whose surface has been treated with methyl groups.

10. An electric wire which comprises a sheath layer formed from the polyolefin resin composition of any one of claims 1 to 9.
